# EUROPEAN PATENT APPLICATION

(11) **EP 2 154 871 A1**
(43) Date of publication of application: **17.02.2010**
(21) Application number: 09167555.3
(22) Date of filing: 10.08.2009
(51) Int. Cl.: H04L 29/12, H04L 29/06

(54) **Communication system and home gateway**

(30) Priority: 11.08.2008 JP 2008206549
(71) Applicant: Hitachi Ltd., Tokyo 100-8280 (JP)
(72) Inventor: Matsubara, Daisuke, Tokyo 100-8220 (JP); Takeda, Yukiko, Tokyo 100-8220 (JP)
(74) Representative: Erny, Tobias

(57) **Abstract**

Even when a site of the Internet is used, switching is automatically performed to a connection via NGN, and a service via the NGN is provided to a user terminal (7a). A HGW (9) transmits a request from the user terminal (7a) in accordance with a destination address to a redirect server (5) and a service provider server (N3) through one of an IP network (N1a) and an NGN network (N1b). The redirect server (5) redirects access to the service provider server (N3) via the IP network (N1a) to access via the NGN network (N1b). The user terminal (7a) accesses one of communication devices of the service provider server (N3) through the IP network (N1a), and communication with the service provider server (N3) is performed through the NGN network (N1b) based on address information of a redirect destination from the redirect server (5).

## Description

### CLAIM OF PRIORITY

The present application claims priority from Japanese patent application JP 2008-206549 filed on August 11, 2008, the content of which is hereby incorporated by reference into this application.

### BACKGROUND OF THE INVENTION

### Field of the Invention

The present invention relates to a communication system and a home gateway, and particularly to a communication system and a home gateway, in which switching can be automatically performed to a connection via Next Generation Network (NGN).

### Description of the Related Art

In general, when a user accesses a service of a communication system, there is a case where access via the Internet and access via the NGN are independently performed.

Besides, patent document 1 discloses a technique in which when sound quality in a route via an Internet Protocol (IP) network is not excellent, in accordance with an instruction of a sender or automatically by determination of a system, a different route in the IP network or a different route via a network (for example, Synchronous Transfer Mode (STM) network/Asynchronous Transfer Mode (ATM) network) other than the IP network is selected and a telephone connection is made.
[Patent document 1] JP-A-2001-144854

### SUMMARY OF THE INVENTION

When a user accesses a server of a service provider via the Internet, there is a case where a service (communication service such as, for example, high quality Video On Demand (VOD) or IP telephone) provided by the server of the service provider via the NGN can not be used. For example, when the high quality VOD is delivered via the NGN, it is necessary to connect to the NGN from the first. When access is being performed via the Internet, there is a case where it is necessary that the connection via the Internet is once cut off, access via the NGN is established, and access is made to the service provider.

In view of the above, it is an object of the invention to enable a service via NGN to be provided to a user terminal by automatically performing switching to a connection via the NGN even when the user terminal uses a site of the Internet.

According to the invention, there is provided a communication system comprising:
a home gateway which connects a user terminal to a first network and a second network, receives, from the user terminal, a first request including identification information of a service provider to provide a communication service to the user terminal through the second network, and transfers the first request through the first network; and
a server which correspondingly stores identification information of the service provider to provide the communication service through the second network and address information used by the user terminal to access a communication device of the service provider via the second network, and transmits corresponding address information to the user terminal based on the identification information of the service provider included in the first request transferred by the home gateway,
wherein the home gateway receives a second request for accessing the communication device of the service provider from the user terminal, and
the home gateway establishes a session with the second network in accordance with the address information included in the second request, and transmits the received second request through the session to the communication device of the service provider.

In the communication system described above, for example,
the first and the second requests may be HTTP requests. Then,
the server may preferably be a redirect server to send back the address information of a redirect destination in response to first HTTP request from the user terminal.

Moreover, in the communication system described above, for example,
the first request may be a host name resolution request,
the second request may be an HTTP request. Then,
the server may preferably be a name resolution server to send back the address information in response to the host name resolution request.

According to the invention, there is provided a home gateway for connecting a user terminal to a first network and a second network, comprising:
a data storage section which correspondingly stores identification information of a service provider to provide a communication service to the user terminal and address information used by the user terminal to access a communication device of the service provider via one of the first network and the second network;
a name resolution section which receives a host name resolution request including identification information of a service provider from the user terminal, refers to the data storage section to acquire corresponding address information based on the identification information of the service provider included in the host name resolution request, and transmits acquired address information to the user terminal, and
a network function section which receives, from the user terminal, a request including the address information and for accessing the communication device of the service provider, selects one of the first and the second networks in accordance with the address information, and transmits the request to the communication device of the service provider through selected one of the first and the second networks.

According to the invention, there is provided a home gateway in a communication system which comprises the home gateway which connects a user terminal to a first network and a second network, and a server which correspondingly stores identification information of a service provider to provide the communication service through the second network and address information used by the user terminal to access a communication device of the service provider via the second network, and transmits corresponding address information to the user terminal based on the identification information of the service provider included in a first request transferred by the home gateway, wherein the home gateway:
receives, from the user terminal, the first request including identification information of the service provider to provide a communication service to the user terminal through the second network, and transfers the first request through the first network;
receives a second request for accessing the communication device of the service provider from the user terminal which received the address information corresponding to the first request; and
establishes a session with the second network in accordance with the address information included in the second request, and transmits the received second request through the session to the communication device of the service provider.

According to the invention, it is possible to enable a service via NGN to be provided to a user terminal by automatically performing switching to a connection via the NGN even when the user terminal uses a site of the Internet.

### BRIEF DESCRIPTION OF THE DRAWINGS

FIG. 1 is a structural view of a communication system using a redirect server.
FIG. 2 is a structural view of a redirect server 5.
FIG. 3 is an explanatory view of a network function information 510.
FIG. 4 is a structural view of a HGW 9.
FIG. 5 is an explanatory view of an NGN address information 910.
FIG. 6 is a sequence view at the time of switching between networks when a redirect server is used.
FIG. 7 is a flowchart of the redirect server 5.
FIG. 8 is a flowchart of the HGW 9.
FIG. 9 is a structural view of a communication system using a DNS server.
FIG. 10 is a sequence view at the time of switching between networks when the DNS server is used.
FIG. 11 is a structural view of a communication system when a HGW having the function of a DNS is used.
FIG. 12 is a structural view of a HGW 90.
FIGS. 13A and 13B are explanatory views of a host name resolution table 930 and an NGN address information 910.
FIG. 14 is a sequence view at the time of switching between networks when the HGW having the function of the DNS is used.
FIG. 15 is a flowchart of the HGW 90.

### DETAILED DESCRIPTION OF THE INVENTION

### 1. First Embodiment

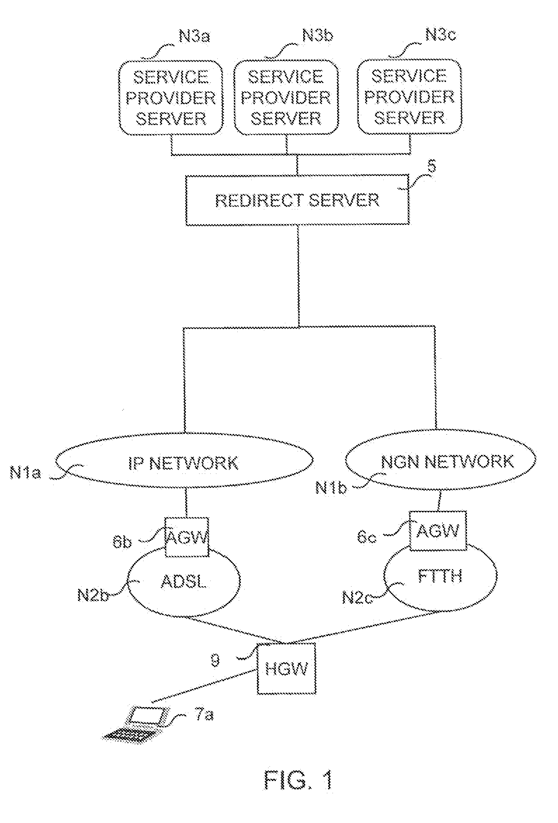

FIG. 1 is a structural view of a communication system using a redirect server.

This communication system includes, for example, service provider servers N3a, N3b and N3c, a redirect server (server) 5, access gateways (AGWs) 6b and 6c, and a home gateway (HGW) 9. The service provider server (hereinafter often simply referred to as the service provider) N3 is connected to an IP network (first network) N1a and an NGN network (second network) N1b through the redirect server 5. The HGW 9 is connected to the IP network N1a through an Asymmetric Digital Subscriber Line (ADSL) N2b and the AGW 6b. Besides, the HGW 9 is connected to the NGN network N1b through a Fiber To The Home (FTTH) N2c and the AGW 6c. The HGW 9 is connected to a user terminal 7a. Incidentally, the HGW 9 can be connected to plural user terminals.

The HGW 9 transmits a request from the user terminal 7a to the redirect server 5 and the service provider server N3 through the IP network N1a or the NGN network N1b in accordance with a destination address. The redirect server 5 redirects the access to the service provider server N3 via the IP network N1a to the access via the NGN network N1b.

The service provider server N3 provides a communication service such as, for example, high quality VOD or IP telephone. Incidentally, the service provider server N3 may be an appropriate communication device. The AGW 6 mutually converts data different in protocol between the network connected with the redirect server 5 and the network connected with the HGW 9 and enables communication. The user terminal 7a accesses one of the service provider servers N3 through, for example, the IP network N1a, and communications with the specified service provider server N3 is performed through the NGN network N1b based on the address information of the redirect destination from the redirect server 5.

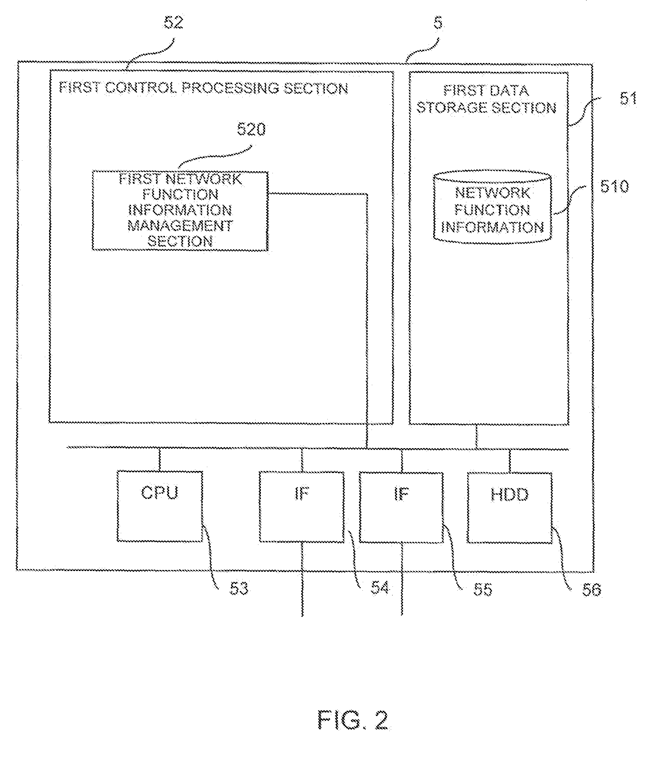

FIG. 2 is a structural view of the redirect server 5.

The redirect server 5 includes, for example, a first data storage section 51, a first control processing section 52, a processor (CPU) 53, interfaces (IFs) 54 and 55, and a hard disk drive (HDD) 56. The first data storage section 51 stores, for example, network function information 510. The first control processing section 52 includes, for example, a first network function information management section 520.

The CPU executes various processes in the redirect server 5. Incidentally, the first control processing section 52 may be executed by the CPU 53. The IFs 54 and 55 are interfaces for communicating with, for example, the service provider server N3, the IP network N1a and the NGN network N1b. The HDD 56 stores various data in the redirect server 5. Incidentally, the first data storage section may be in the HDD 56.

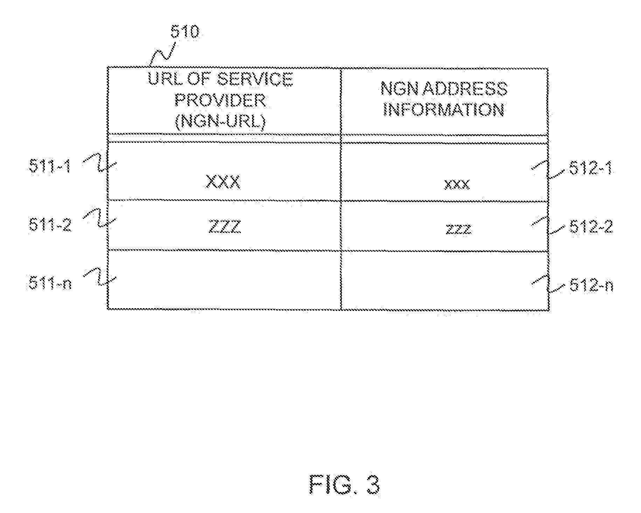

FIG. 3 is an explanatory view of the network function information 510.

The network function information 510 includes, for example, address information 512 corresponding to a URL 511 of the service provider and for accessing the service provider server N3. For example, the URL (NGN-URL) of the service provider server N3 for providing a service through the NGN network N1b is stored in the URL 511 of the service provider. Besides, an address (NGN address) for accessing the service provider server N3 via the NGN network N1b is stored in the address information 512.

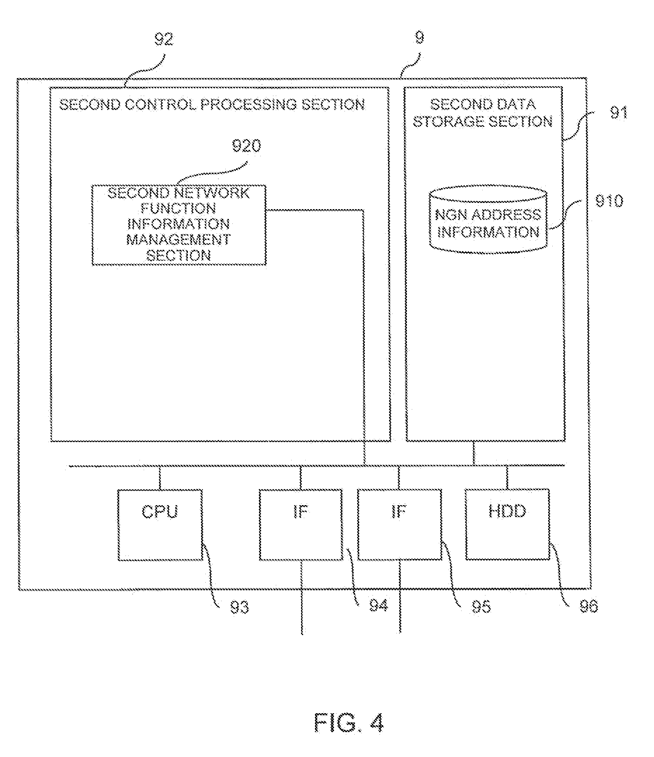

FIG. 4 is a structural view of the HGW 9.

The HGW 9 includes, for example, a second data storage section (address information storage section) 91, a second control processing section 92, a CPU 93, IFs 94 and 95, and a HDD 96. The second data storage section 91 stores, for example, NGN address information 910. The second control processing section 92 includes, for example, a second network function information management section (network function section) 920. The CPU 93, the IF 94, the IF 95 and the HDD 96 are the same as the CPU 53, the IF 54, the IF 55 and the HDD 56 of the redirect server 5.

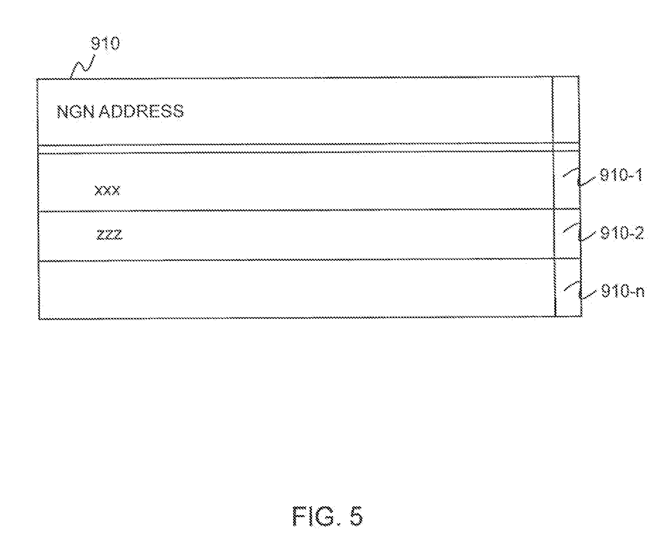

FIG. 5 is an explanatory view of the NGN address information 910.

The NGN address information 910 includes, for example, one or plural NGN addresses (address list). The NGN address may correspond to, for example, the NGN address 512 of FIG. 3. Besides, instead of including the respective addresses, a range of addresses or only higher-order bits corresponding to the NGN network N1b may be stored.

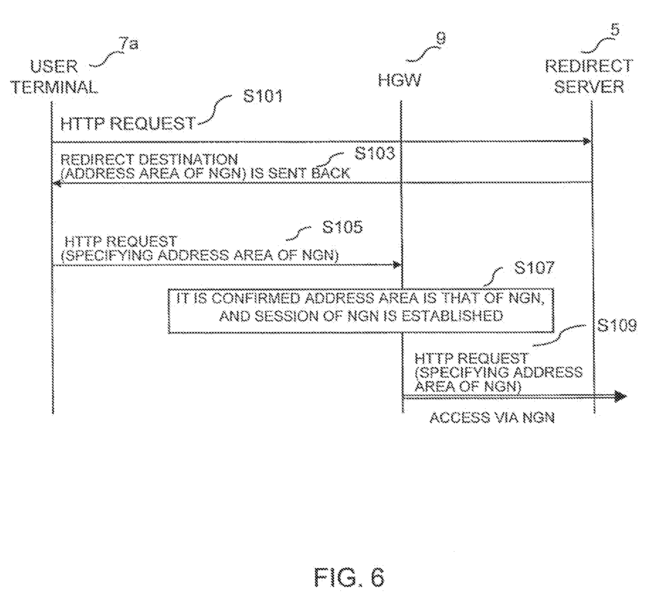

FIG. 6 is a sequence view at the time of switching between networks when the redirect server is used.

The user terminal 7a transmits a first HTTP request to the redirect server 5 (S101). The first HTTP request includes, for example, a URL (identification information) of the service provider server N3. Here, the HGW 9 transfers the first HTTP request through the IP network N1a to the service provider server N3. The redirect server 5 sends back the redirect destination (address area of the NGN) to the user terminal 7a (S103). For example, based on the URL of the service provider server N3 included in the first HTTP request, the redirect server 5 refers to the network function information 510 to acquire the corresponding NGN address information 512, and transmits the acquired NGN address information 512 as the redirect destination to the user terminal 7a.

When receiving the redirect destination, the user terminal 7a transmits a second HTTP request (specifying an address area of NGN) to the HGW 9 (S105). The second HTTP request includes the NGN address of the received redirect destination. The HGW 9 confirms that the address of the second HTTP request is the address area of the NGN, and establishes a session with the NGN (S107). For example, the HGW can confirm that the address of the second HTTP request is the NGN address area when it exists in the NGN address information 910. The HGW 9 transmits the second HTTP request (specifying an address area of NGN) via the NGN network N1b to the service provider server N3 (S109). That is, the HGW 9 accesses the service provider server N3 via the NGN network N1b.

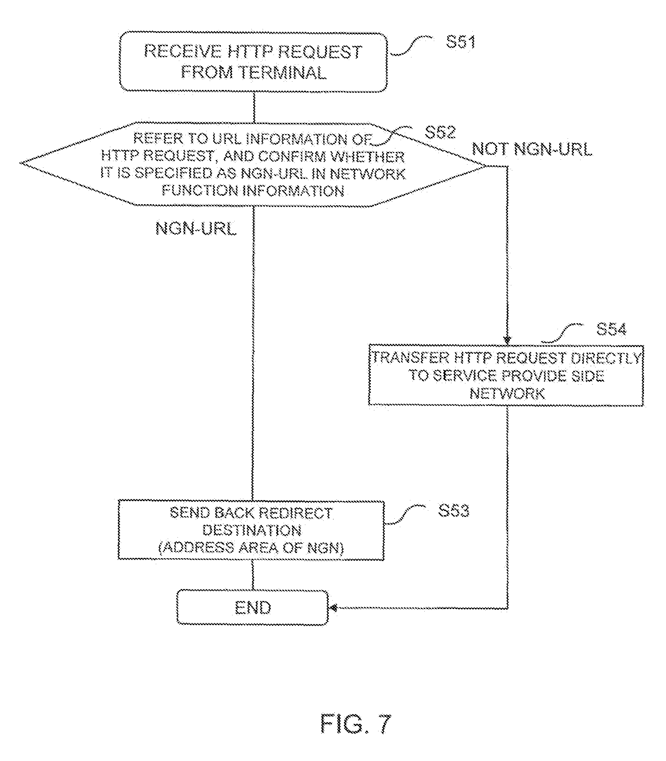

FIG. 7 is a flowchart of the redirect server 5.

The redirect server 5 (for example, the first network function information management section 520, the same applies hereinafter) receives the first HTTP request from the user terminal 7a (S51). For example, the redirect server 5 receives the first HTTP request transmitted by the user terminal 7a via the HGW 9, the ADSL N2b, the AGW 6b and the IP network N1a.

The redirect server 5 refers to the URL information of the first HTTP request and confirms whether the URL information is specified as NGN-URL in the network function information 510 (S52). For example, the redirect server 5 refers to the URL 511 of the service provider of the network function information 510 stored in the first data storage section 51 based on the URL information of the received first HTTP request, and confirms that the URL information is specified as the NGN-URL when the appropriate URL exists.

When the URL information of the first HTTP request is the NGN-URL (S52), the redirect server 5 sends back the redirect destination (address area of the NGN) to the user terminal 7a (S53). For example, the redirect server 5 acquires the NGN address 512 corresponding to the appropriate URL 511 of the service provider from the network function information 510, and transmits it as the redirect destination to the user terminal 7a.

On the other hand, when the URL information of the first HTTP request is not the NGN-URL (S52), the redirect server 5 transfers the first HTTP request to the network of the service provider server N3 side (S54). In this case, for example, a service is provided from the service provider server N3 through the IP network N1a.

Besides, when receiving the second HTTP request transmitted by the user terminal 7a via the HGW 9, the FTTH N2c, the AGW 6c and the NGN network N1b, the redirect server 5 transfers it to the network of the service provider server N3 side.

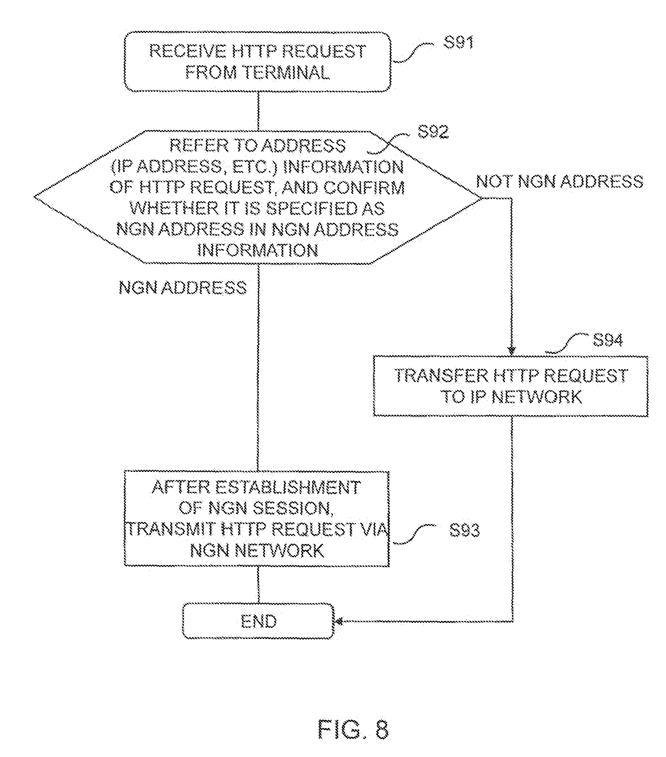

FIG. 8 is a flowchart of the HGW 9.

The HGW 9 (for example, the second network function management section 920, the same applies hereinafter) receives the first or the second HTTP request from the user terminal 7a (S91). The HGW 9 refers to the address (IP address, etc.) information of the HTTP request, and confirms whether the address information is specified as an NGN address in the NGN address information 910 (S92). For example, based on the address information of the received first or the second HTTP request, the HGW 9 refers to the NGN address of the NGN address information 910 stored in the second data storage section 91, and confirms that the address information is specified as the NGN address when the appropriate address exists.

When the address information of the first or the second HTTP request is the NGN address (S92), the HGW 9 establishes an NGN session, and then transmits the HTTP request to the service provider server N3 via the NGN network N1b (S93). Besides, for example, the HGW 9 establishes a Session Initiation Protocol (SIP) session with the service provider server N3 via the NGN network N1b, and then transmits the HTTP request to the service provider server N3. This corresponds to the process for the second HTTP request.

On the other hand, when the address information of the first or the second HTTP request is not the NGN address (S92), the HGW 9 transfers the HTTP request to the IP network (S94). This corresponds to the process for the first HTTP request.

### 2. Second Embodiment

In this embodiment, for example, a Domain Name System (DNS) server (name resolution server) at the Internet side used by the user performs host name resolution on the NGN side.

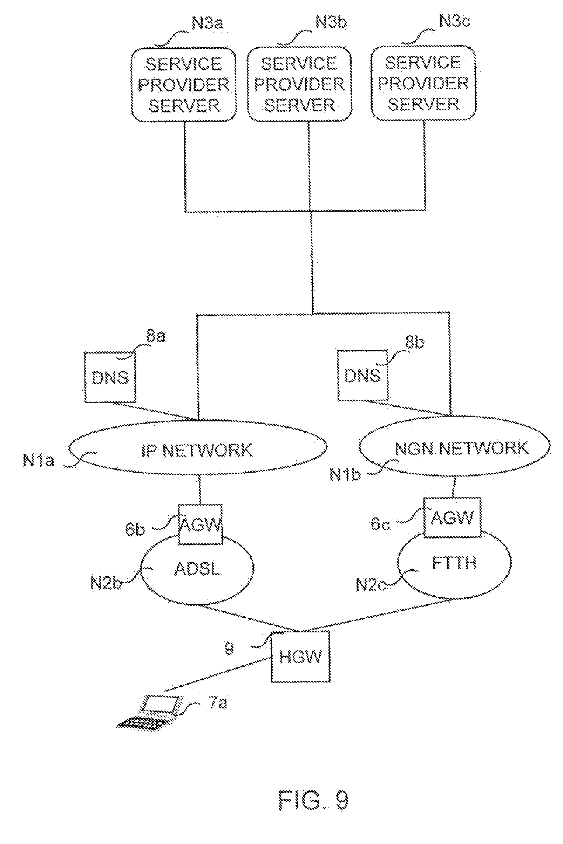

FIG. 9 is a structural view of a communication system using the DNS server.

This communication system includes, for example, service provider servers N3a, N3b and M3c, DNS servers 8a and 8b, AGWs 6b and 6c, and a HGW 9. The HGW 9 is connected to the DNS server 8a and the service provider server N3 through an ADSL N2b, the AGW 6b and an IP network N1a. Besides, the HGW 9 is connected to the DNS server 8b and the service provider server N3 through an FTTH N2c, the AGW 6c and an NGN network N1b. The HGW 9 is connected to a user terminal 7a.

In addition to the function of the HGW 9 of the first embodiment, the HGW 9 of this embodiment has a function to transfer a DNS request (host name resolution request) transmitted from the user terminal 7a to the DNS server 8. The other processes are the same as the first embodiment. For example, when receiving an HTTP request from the user terminal 7a, the HGW 9 confirms the destination IP address. When confirming that the received HTTP request is the IP address domain of the NGN, the HGW 9 establishes a SIP NGN session with the service provider server N3, and transfers the received HTTP request to the service provider server N3.

The DNS server 8 sends back the address information (IP address domain of NGN) in response to the DNS request (DNS resolution request of the host name of the NGN-URL). The process of the DNS server 8 is the same as that of a normal DNS server. Incidentally, as compared with the normal DNS server, the DNS server 8 further stores address information (NGN address) for accessing the service provider server N3 via the NGN network N1b correspondingly to the URL of the service provider server N3 to provide a communication service to the user terminal 7a through the NGN network N1b. For example, the DNS server 8a is the DNS server of the IP network N1a, and the DNS 8a sends back the address information of the NGN network N1b in response to the DNS request from the user terminal 7a. Incidentally, the DNS server 8b may send back the address information in response to the DNS request from the user terminal 7a.

The service provider server N3 and the AGW 6 are the same as those of the first embodiment.

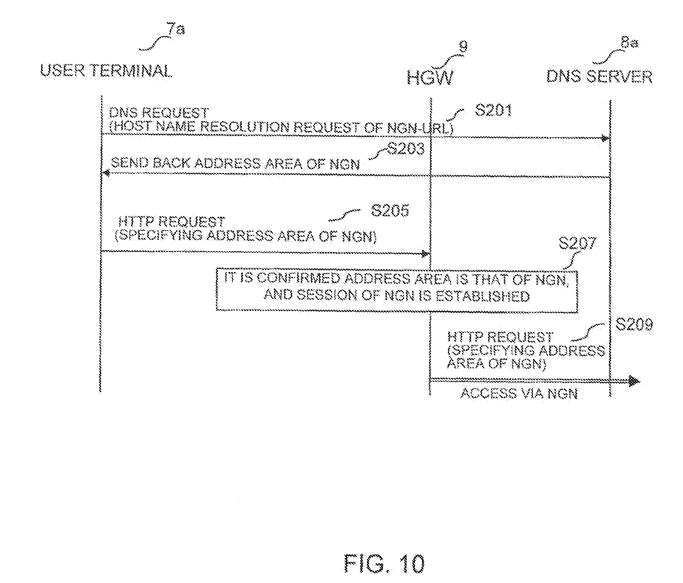

FIG. 10 is a sequence view at the time of switching between networks when the DNS server is used.

The user terminal 7a transmits the DNS request (host name resolution request of NGN-URL) to the DNS server 8a (S201). The DNS request includes, for example, URL of the service provider server N3. Here, the HGW 9 transfers the DNS request to the DNS server 8a through, for example, the IP network N1a. The DNS server 8a sends back the address area of the NGN to the user terminal 7a (S203). For example, the DNS server 8a performs name resolution based on the URL of the service provider server N3 included in the DNS request, and transmits the address information corresponding to the URL to the user terminal 7a. When receiving the address information, the user terminal 7a transmits an HTTP request (specifying an address area of NGN) to the HGW 9 (S205). After this, the process of steps S207 to S209 is the same as that of steps S107 to S109 of the first embodiment.

Besides, the operation of the HGW 9 at the time of receiving the HTTP request is the same as the operation of the flowchart of the first embodiment shown in FIG. 8.

### 3. Third Embodiment

In this embodiment, for example, a HGW operates as a DNS server for a user terminal.

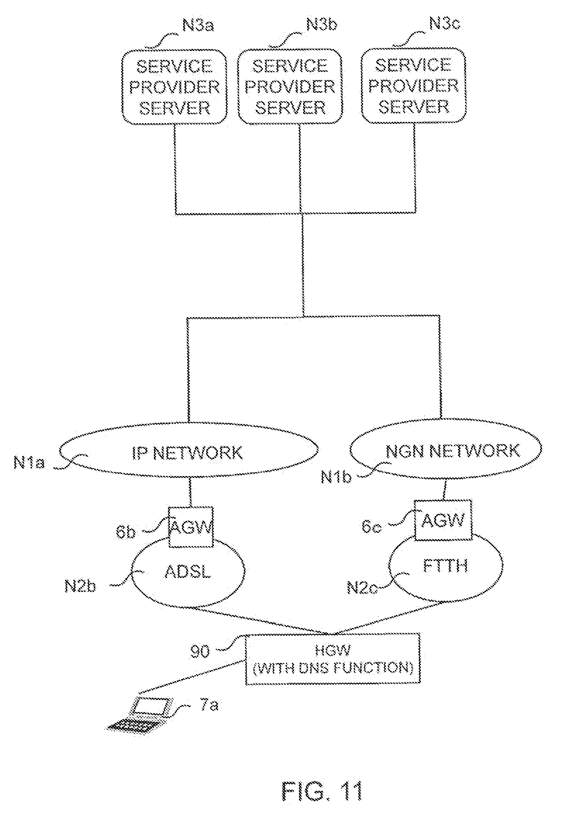

FIG. 11 is a structural view of a communication system using a HGW having a function of DNS. This communication system includes, for example, service provider servers N3a, N3b and N3c, AGWs 6b and 6c, and a HGW 90. The service provider server N3 is connected to an IP network N1a and an NGN network N1b. The HGW 90 is connected to the IP network N1a through an ADSL N2b and the AGW 6b. Besides, the HGW 90 is connected to the NGN network N1b through an FTTH N2c and the AGW 6c. The HGW 90 is connected to a user terminal 7a.

The HGW 90 has a DNS server function in addition to the function of the HGW 9 of the first embodiment.

The HGW 90, as the DNS server, sends back, for example, the IP address domain of the NGN network N1b to the user terminal 7a at the time of DNS resolution of the host name of the NGN-URL for the user terminal 7a. When receiving the HTTP request from the user terminal 7a, the HGW 90 confirms the destination IP address. After confirming that the destination IP address is the IP address domain of the NGN network N1b, the HGW 90 establishes a SIP NGN session with the service provider server N3, and transfers the HTTP request to the service provider server N3.

The service provider server N3 and the AGW 6 are the same as those of the first embodiment.

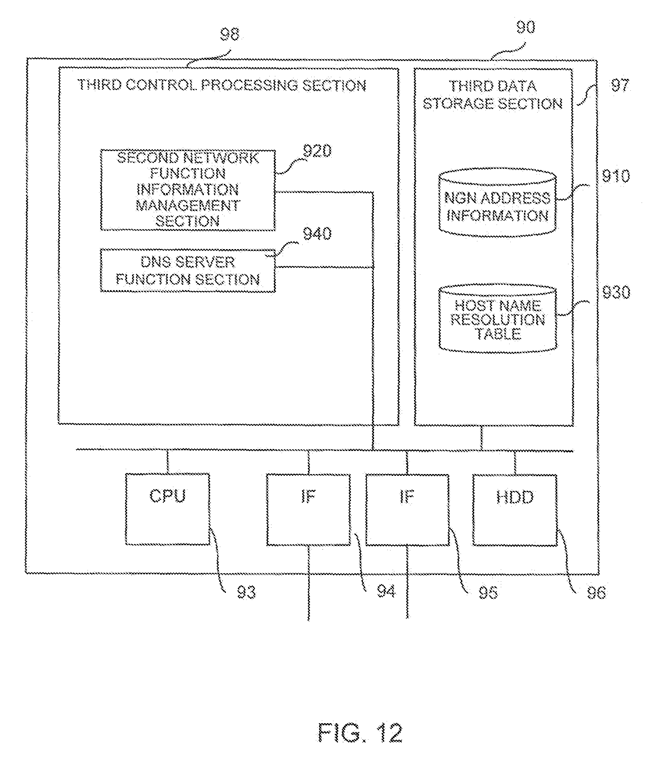

FIG. 12 is a structural view of the HGW 90.

The HGW 90 includes, for example, a third data storage section 97, a third control processing section 98, a CPU 93, IFs 94 and 95, and a HDD 96. As compared with the second data storage section 91 of the first embodiment, the third data storage section 97 further stores a host name resolution table 930. For example, as compared with the second control processing section 92 of the first embodiment, the third control processing section 98 further includes a DNS server function section (name resolution section) 940. The CPU 93, the IF 94, the IF 95 and the HDD 96 are the same as those of the first embodiment.

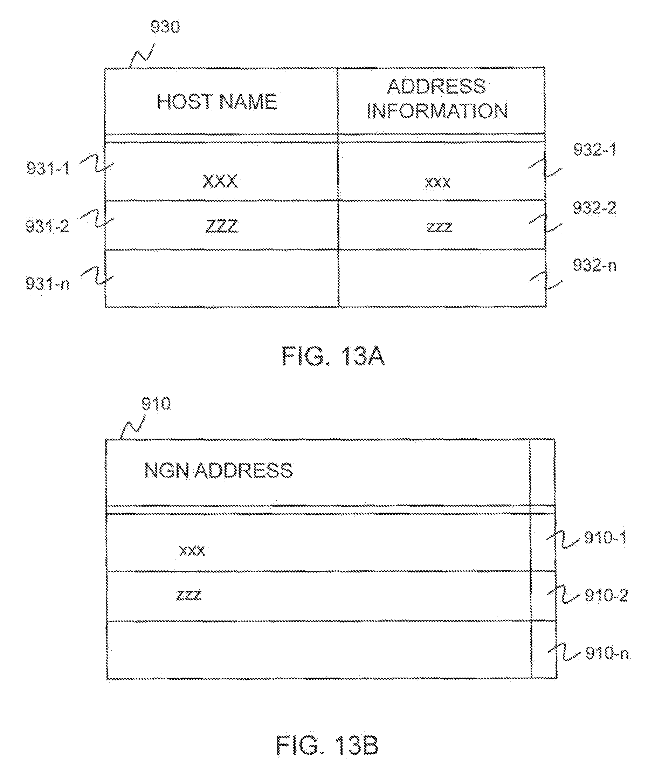

FIGS. 13A and 13B are explanatory views of the host name resolution table 930 and the NGN address information 910.

The host name resolution table 930 includes, for example, address information 932 corresponding to a host name 931. The host name 931 includes, for example, the URL of the service provider server N3 to provide a service through the IP network N1a or the NGN network N1b. Besides, the address information 932 includes an address (IP address or NGN address) for accessing the service provider server N3 via the IP network N1a or the NGN network N1b.

The NGN address information 910 is the same as the NGN address information 910 of the first embodiment.

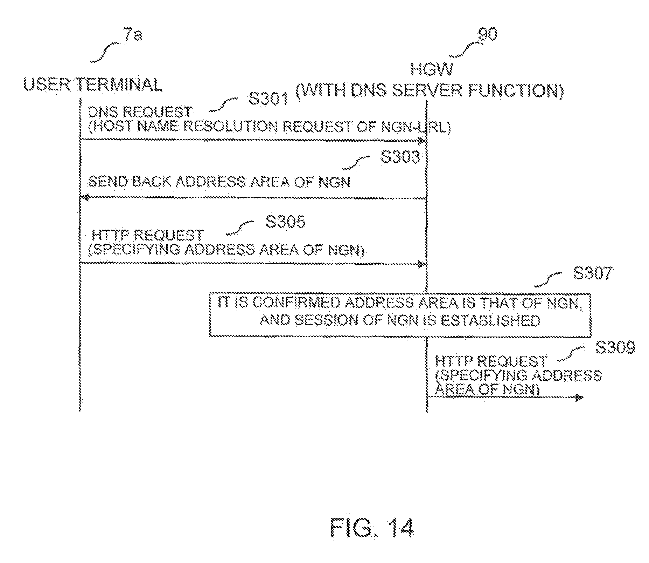

FIG. 14 is a sequence view at the time of switching between networks when the HGW having the DNS function is used.

The user terminal 7a transmits a DNS request (host name resolution request of NGN-URL) to the HGW 90 (S301). The HGW 9 correspondingly stores the URL of the service provider server N3 and the address information used by the user terminal 7a to access a communication device of the service provider server N3 via the IP network N1a or the NGN network N1b. The HGW 90 acquires the corresponding address information based on the URL of the service provider server N3 included in the DNS request from the user terminal 7a. The HGW 90 sends back the acquired address information (for example, the address area of the NGN) to the user terminal 7a (S303). When receiving the address information, the user terminal 7a transmits the HTTP request (specifying the address area of the NGN) to the HGW 90 (S305). After this, the process of steps S307 to S309 is the same as that of steps S107 to S109 of the first embodiment.

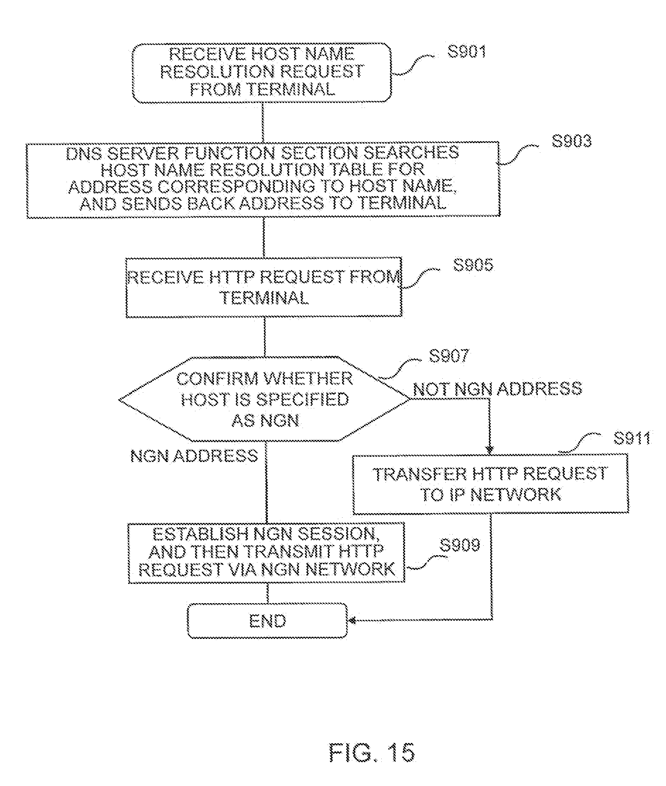

FIG. 15 is a flowchart of the HGW 90.

The HGW 90 receives a DNS request (host name resolution request) from the user terminal 7a (S901). The DNS request includes the host name (for example, identification information such as URL) of the service provider server N3. The HGW 90 (for example, the DNS server function section 940, the same applies hereinafter) searches the host name resolution table 930 for the address corresponding to the host name, and sends back the address to the user terminal 7a (S903). For example, the HGW 90 refers to the host name 931 of the host name resolution table 930 stored in the third data storage section 97 based on the received host name, acquires the address information 932 corresponding to the appropriate host name from the host name resolution table 930, and transmits it to the user terminal 7a.

The HGW 90 (for example, the second network function information management section 920, the same applies hereinafter) receives the HTTP request from the user terminal 7a (S905). The HGW 90 confirms whether the host (address information) is specified as the NGN (S907). For example, the HGW 90 refers to the NGN address of the NGN address information 910 stored in the third data storage section 97 based on the address information of the received HTTP request, and confirms that the address information is the NGN address when the appropriate address exists. When the address information of the HTTP request is the NGN address (S907), the HGW 90 establishes an NGN session, and then transmits the HTTP request via the NGN network N1b to the service provider server N3 (S909). For example, the HGW 90 establishes a SIP session with the service provider server N3 via the NGN network N1b, and then transmits the HTTP request to the service provider server N3.

On the other hand, when the address information of the HTTP request is not the NGN address (S907), the HGW 90 transfers the HTTP request to the IP network N1a (S911).

### 4. Others

In the first to the third embodiments, even when the user terminal 7a uses a site of the Internet, switching is automatically performed to the connection via the NGN network N1b, and the quality assurance or line authentication can be used. Besides, in the first to the third embodiments, after switching is automatically performed to the connection via the NGN network N1b, a connection can be automatically made to the service first selected via the Internet.

Incidentally, the first to the third embodiments can be used for, for example, redirecting from the Internet site to the Internet Protocol Television (IPTV) service. Besides, the first to the third embodiments can be used for, for example, the Software as a Service (SaS) (for example, the accounting process of an E-commerce site, Internet banking, etc.) of the NGN.

The present invention can be applied to a communication system in which when a user accesses a service of the communication system, access via the Internet and access via the NGN are independently performed.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A communication system comprising:
a home gateway (9) which connects a user terminal (7a) to a first network (N1a) and a second network (N1b), receives, from the user terminal (7a), a first request including identification information of a service provider (N3) to provide a communication service to the user terminal (7a) through the second network (N1b), and transfers the first request through the first network (N1a); and
a server (5; 8) which correspondingly stores identification information of the service provider (N3) to provide the communication service through the second network (N1b) and address information used by the user terminal (7a) to access a communication device of the service provider (N3) via the second network (N1b), and transmits corresponding address information to the user terminal (7a) based on the identification information of the service provider (N3)included in the first request transferred by the home gateway (9),
wherein the home gateway (9) receives a second request for accessing the communication device of the service provider (N3) from the user terminal (7a), and
the home gateway (9) establishes a session with the second network (N1b) in accordance with the address information included in the second request, and transmits the received second request through the session to the communication device of the service provider (N3).

2. The communication system according to claim 1, wherein
the home gateway (9) includes an address information storage section (91) previously storing address information corresponding to the second network (N1b),
when receiving the second request, the home gateway (9) confirms whether the address information included in the second request is stored in the address information storage section (91), and
when the address information is stored, the home gate (9) establishes the session with the second network (N1b).

3. The communication system according to claim 1 or 2, wherein the first network (N1a) is an IP network, and the second network (N1b) is an NGN network.

4. The communication system according to claim 3, wherein
the user terminal (7a) accesses one of communication devices of the service provider (N3) through the IP network, and
communication with the communication device of the service provider (N3) is performed through the NGN network based on the address information from the server (5; 8)and the second request.

5. The communication system according to at least one of claims 1-4, wherein
the first and the second requests are HTTP requests, and
the server (5; 8) is a redirect server (5) to send back the address information of a redirect destination in response to first HTTP request from the user terminal (7a).

6. The communication system according to at least one of claims 1-4, wherein
the first request is a host name resolution request,
the second request is an HTTP request, and
the server (5; 8) is a name resolution server (8) to send back the address information in response to the host name resolution request.

7. The communication system according to claim 6, wherein
the name resolution server (8) is a name resolution server (8) of the first network (N1a), and
the name resolution server (8) sends back the address information of the second network (N1b) in response to the host name resolution request.

8. A home gateway for connecting a user terminal to a first network and a second network, comprising:
a data storage section (91) which correspondingly stores identification information of a service provider (N3) to provide a communication service to the user terminal (7a) and address information used by the user terminal (7a) to access a communication device of the service provider (N3) via one of the first network (N1a) and the second network (N1b);
a name resolution section which receives a host name resolution request including identification information of a service provider (N3) from the user terminal (7a), refers to the data storage section (91) to acquire corresponding address information based on the identification information of the service provider (N3) included in the host name resolution request, and transmits acquired address information to the user terminal (7a), and
a network function section (920) which receives, from the user terminal (7a), a request including the address information and for accessing the communication device of the service provider (N3), selects one of the first and the second networks (N1a, N1b) in accordance with the address information, and transmits the request to the communication device of the service provider (N3) through selected one of the first and the second networks (N1a, N1b).

9. The home gateway according to claim 8, wherein
the data storage section (91) includes an address information storage section (910) previously storing address information corresponding to the second network (N1b),
when receiving the request, the network function section (920) confirms whether the address information included in the request is stored in the address information storage section (910), and
when the address information is stored, the network function section (920) selects the second network (N1b), establishes a session through the second network (N1b), and transmits the request to the communication device of the service provider (N3) through the session.

10. The home gateway according to claim 8 or 9, wherein the first network (N1a) is an IP network, and the second network (N1b) is an NGN network.

11. A home gateway in a communication system which comprises the home gateway (9) which connects a user terminal (7a) to a first network (N1a) and a second network (N1b), and a server (5; 8) which correspondingly stores identification information of a service provider (N3) to provide the communication service through the second network (N1b) and address information used by the user terminal (7a) to access a communication device of the service provider (N3) via the second network (N1b), and transmits corresponding address information to the user terminal (7a) based on the identification information of the service provider (N3) included in a first request transferred by the home gateway (9), wherein the home gateway (9):
receives, from the user terminal (7a), the first request including identification information of the service provider (N3) to provide a communication service to the user terminal (7a) through the second network (N1b), and transfers the first request through the first network (N1a);
receives a second request for accessing the communication device of the service provider (N3) from the user terminal (7a) which received the address information corresponding to the first request; and
establishes a session with the second network (N1b) in accordance with the address information included in the second request, and transmits the received second request through the session to the communication device of the service provider (N3).

12. The home gateway according to claim 11, wherein
the home gateway (9) includes an address information storage section (910) previously storing address information corresponding to the second network (N1b),
when receiving the second request, the home gateway (9) confirms whether the address information included in the second request is stored in the address information storage section (910), and
when the address information is stored, the home gateway (9) establishes the session with the second network (N1b).

13. The home gateway according to claim 11 or 12, wherein the first network (N1a) is an IP network, and the second network (N1b)is an NGN network.
